# EUROPEAN PATENT APPLICATION

(11) **EP 1 313 315 A2**
(43) Date of publication of application: **21.05.2003**
(21) Application number: 02025740.8
(22) Date of filing: 15.11.2002
(51) Int. Cl.: H04N 5/76

(54) **Information recording and playback apparatus**

(30) Priority: 20.11.2001 JP 2001354226
(71) Applicant: Pioneer Corporation, Meguro-ku, Tokyo (JP)
(72) Inventor: Ogikubo, Takahiko, Tokorozawa-City, Saitama (JP)
(74) Representative: Manitz, Finsterwald & Partner GbR

(57) **Abstract**

A recording and playback machine can record and play back information blocks simultaneously. The machine displays names of information blocks currently recorded and played back when a user makes a stop operation. The user then selects a name of an information block, for which the user wants to stop recording or playing back, from the displayed names. The machine stops the recording or playback operation for the information block selected by the user. The machine can stop only the recording or playing back operation that the user wants to stop during simultaneous recording and playback operations. The machine does not need a complicated operating system for this function.

## Description

### BACKGROUND OF THE INVENTION

### Field of the Invention

The present invention relates to an information recording and playback apparatus which is capable of performing recording and playback operations simultaneously.

### Description of the Related Art

Currently, recording devices such as DVD recorders, hard disk recorders and the like equipped with television tuners have been commercialized as information recording and playback devices which can simultaneously perform recording and playback operations. Such recording devices can, for example, play back previously recorded television programs while recording currently broadcast programs. The recording device usually has a remote controller. When a user presses a stop button installed on an operation panel of the remote controller, the recording device preferentially stops one of the recording and playback operations. The preference is set beforehand. Accordingly, the following problem arises: specifically, if the user is unaware of (or does not remember) this initially set preference, the recording operation may be stopped in spite of the fact that the user has pressed the stop button with the intention of stopping the playback operation. In order to prevent such inconveniences, a stop button that is used to stop the recording operation and another stop button that is used to stop the playback operation may be separately installed on the control panel of the remote controller. In such a case, however, the number of operating buttons is increased so that the operating panel of the remote controller becomes complicated.

### SUMMARY OF THE INVENTION

One object of the present invention is to provide an information recording and playback apparatus which makes it possible to stop only the operation that the user intends to stop during simultaneous recording and playback operations, without complicating an operating system.

According to one aspect of the present invention, there is provided a recording and playback apparatus which, while recording at least one information block on at least one recording medium, can play back a desired information block from one or more information blocks that have already been recorded on the recording medium, the recording and playback apparatus comprising: a receiving unit for receiving a stop operation from a user; a display unit for displaying names of all information blocks currently recorded and a name of an information block currently played back when the receiving unit receives the stop operation, so as to allow the user to select the name of the information block, for which the user wants to stop recording or playing back, from the displayed names; and a stop unit for stopping a recording operation or a playback operation for the information block having the name selected by the user. The stop unit has a sole stop button.

The information recording and playback apparatus can therefore stop the recording or playback operation for, for example, a desired television program by means of the single stop button during simultaneous recording and playback of a plurality of programs.

### BRIEF DESCRIPTION OF THE DRAWINGS

Fig. 1 illustrates a block diagram of a broadcast program recording apparatus, which is an example of an information recording and playback apparatus according to the present invention;
Fig. 2 illustrates an operating panel of a remote controller used for the recording apparatus shown in Fig. 1;
Fig. 3 shows one example of a list of program information stored in a recorded-program information memory of the recording apparatus shown in Fig. 1;
Fig. 4 shows an example of the recorded-program list displayed on a screen of a display unit of the recording apparatus shown in Fig. 1;
Fig. 5 shows a recording/playback stopping control subroutine executed by a system controller of the recording apparatus shown in Fig. 1;
Fig. 6 shows an example of a stop-program selection window displayed on the screen of the display unit of the recording apparatus shown in Fig. 1;
Fig. 7 shows the displayed stop-program selection window when a plurality of programs are currently recorded and a single program is currently played back;
Fig. 8 shows the displayed stop-program selection window when an externally connected equipment is operating in a recording state and a built-in recording module is operating in both recording and playing back states; and
Fig. 9 shows the displayed stop-program selection window when one program is currently recorded and another program is currently played back.

### DETAILED DESCRIPTION OF THE INVENTION

An embodiment of the present invention will be described in detail below with reference to the attached figures.

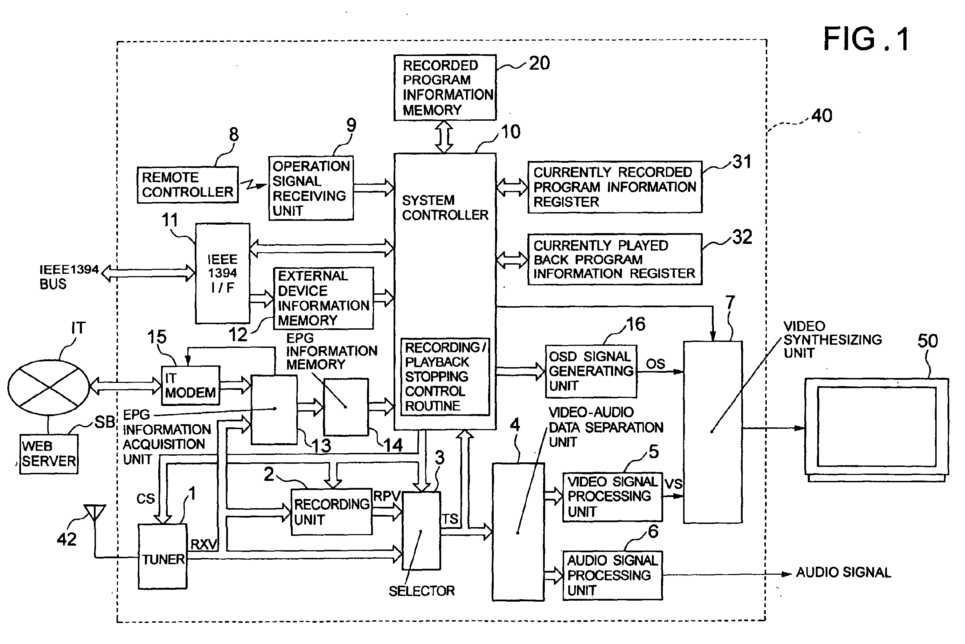

Fig. 1 schematically illustrates a construction of a broadcast program recording apparatus 40 according to an embodiment of the present invention.

The recording apparatus 40 has a television tuner 1. An antenna 42 or cable (not shown) is connected to the television tuner 1 to receive a plurality of television broadcast waves supplied from a plurality of broadcasting stations. The TV tuner 1 selects one broadcast wave in accordance with a channel designated by a channel designating signal CS. One channel corresponds to one broadcasting station. Then, the TV tuner 1 obtains a television signal RXV by demodulating the broadcast wave, and outputs the television signal RXV to a recording unit 2. The television signal RXV is a received television signal and carries an information block corresponding to the received television program. A magnetic disk, optical disk, magnetic tape, semiconductor memory or the like is mounted in the recording unit 2 as a built-in recording medium. The recording unit 2 stores the television signal RXV on the recording medium in accordance with a recording start command signal supplied from a system controller 10. When a playback start command signal and playback start address are supplied to the recording unit 2 from the system controller 10, the recording unit 2 reads a recorded television signal from a position indicated by the playback start address. The start address specifies the recorded position on the recording medium. The recording unit 2 supplies the retrieved television signal to a selector 3 as a playback television signal RPV. The selector 3 selects the received signal RXV or playback signal RPV in accordance with a selection signal supplied from the system controller 10, and supplies the selected signal to both a video-audio data separating circuit 4 and the system controller 10 as a television signal TS. The video-audio data separating circuit 4 separates the television signal TS into video data and audio data, and supplies the video data to a video signal processing circuit 5 and the audio data to an audio signal processing circuit 6. The audio data processing circuit 6 performs audio- demodulation processing on the audio data, and outputs a resulting audio signal to the outside. The video signal processing circuit 5 performs video-demodulation processing on the video data, and supplies a video signal VS thus obtained to a video synthesizing circuit 7.

The received television signal RXV is also input to an EPG (Electronic Program Guide) information acquisition circuit 13 from the tuner 1. If EPG information data is superimposed on the received television signal RXV, the EPG information acquisition circuit 13 extracts the EPG information data from the television signal RXV, and stores the EPG information data in an EPG information memory 14. The EPG information data includes information that indicates the name of the broadcast program, broadcast datee, channel number, program genre, broadcast time, program content, keywords relating to the program content and the like. The term "program genre" classifies the content of the television program in accordance with types of the TV programs. The program genres may be news, sports, drama, movies, music, children's show, animation, education, and entertainment. The "keywords" may be a performer, author, director, name of series, a song name, and a geographical region. On the other hand, when EPG information data is not superimposed on the received television signal RXV, the EPG information acquisition circuit 13 sends an EPG request to an Internet modem 15. In response to the EPG request, the Internet modem 15 accesses a web server SB that is connected to the internet IT. The EPG information data of the received television signal is held in the web server SB. Upon having an access from the Internet modem 15, the web server SB supplies the EPG information data to the Internet modem 15 via the internet IT. The Internet modem 15 receives the EPG information data sent via the internet IT, and transfers the EPG information data to the EPG information acquisition circuit 13. The EPG information acquisition circuit 13 stores the EPG information data in the EPG information memory 14.

An IEEE1394 interface circuit 11 handles signal transmission/reception from/to various information devices that are connected to an IEEE1394 bus. These information devices are referred to as "external information devices" or "external devices". The IEEE1394 interface circuit 11 converts the television signals (including MPEG-converted signals) supplied from the system controller 10 into packets, and sends the packets to the IEEE1394 bus. The IEEE1394 interface circuit 11 accepts audio data, video data and various types of operational command signals from the external information devices, and supplies such data and signals to the system controller 10. The system controller 10 records the audio data and video data in the recording unit 2. The IEEE1394 interface circuit 11 also accepts operating state data from the external devices, and stores this data in an external device information memory 12. The operating state data includes information about types of the external devices, information about the current operating states of the external devices and the like. The "information about the current operating state" indicates, for example, that the external device concerned is in a recording, playback or stopped condition. The "information about the current operating state" also indicates a name of content that is currently recorded or played back by the external device. The "types" of the external devices that are connected to the IEEE1394 bus may be digital video cameras, personal computers, DVD recorders and the like.

An OSD (on-screen display) signal generating circuit 16 uses various types of display data supplied from the system controller 10 to generate OSD image signals OS that are used to display the images carried by this display data on the screen of a display unit 50. The OSD signal generating circuit 16 then supplies the OSD image signals OS to the video synthesizing circuit 7. The display data includes, for example, various types of menu display data, guidance display data, TV program table display data and the like. In accordance with video synthesis control signals supplied from the system controller 10, the video synthesizing circuit 7 superimposes the OSD image signal OS on the video signal VS, or does not perform the superimposing. The video synthesizing circuit 7 therefore outputs the superposed signal, or the OSD image signal OS itself, or the video signal VS itself to the display unit 50 as an ultimate (final) video signal. The display unit 50 creates a picture on the display screen on the basis of the ultimate video signal.

Various types of operating buttons that are used to accept command operations from the user are installed on an operating panel of a remote controller 8.

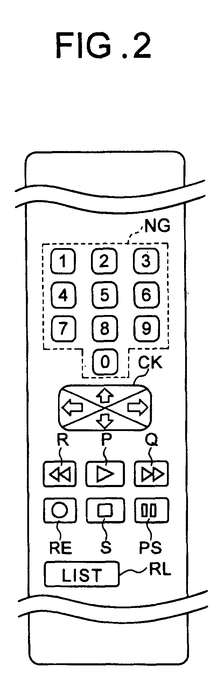

Fig. 2 illustrates a major portion of the operating panel of the remote controller 8. A numerical button group NG which is used to designate a channel for the TV tuner 1 or to input numerical values, and a cursor key set CK which is used to move a cursor displayed on the screen of the display unit 50 to an arbitrary position are disposed on the operating panel of the remote controller 8. A playback button P, fast-forward button Q, rewind button R, pause button PS, stop button S and record button RE which are used to cause the recording unit 2 to perform a recording operation, a playback operation and other operations are also disposed on the operating panel of the remote controller 8. Further, a recorded-program list button RL which is used to display a list of programs already recorded in the recording unit 2 is disposed on the operating panel of the remote controller 8.

The remote controller 8 generates operating signals in accordance with movements of the operating buttons that are pressed by the user, and transmits the operating signals to an operating signal receiving circuit 9. The operating signal receiving circuit 9 receives the operating signals transmitted from the remote controller 8, and supplies the operating signals to the system controller 10.

The system controller 10 performs control actions on the basis of the operating signals that are transmitted from the remote controller 8 via the operating signal receiving circuit 9.

The recording, playback and stopping control performed by the system controller 10 will be described below.

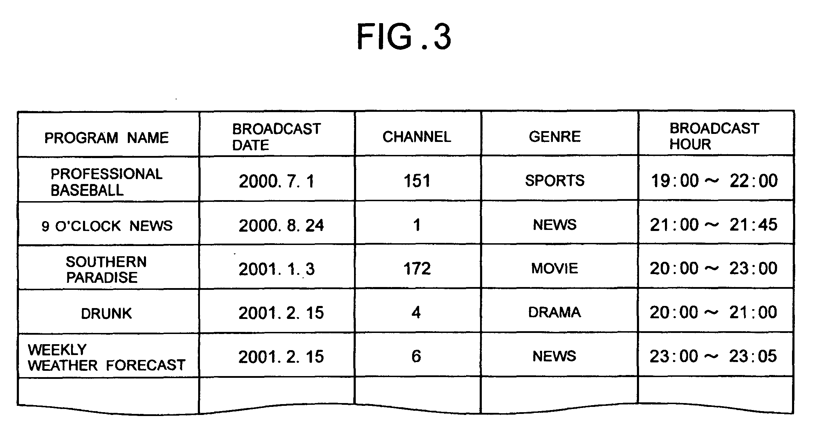

When the user presses desired one or more numerical buttons in the numerical button group NG disposed on the remote controller 8, the system controller 10 sends a channel designating signal CS that selects the broadcasting station having the channel indicated by the pressed numerical button(s) to the TV tuner 1. The TV tuner 1 selects (accepts) the broadcast wave from the broadcasting station having the channel designated by the channel designating signal CS, and demodulates the incoming signal to obtain the television signal RXV of the TV program broadcast from this broadcasting station. When the user presses the record button RE on the remote controller 8, the system controller 10 supplies a recording start command signal to the recording unit 2. In response to the recording start command signal, the recording unit 2 records the television signal RXV on the built-in recording medium. The system controller 10 reads EPG information data (program name, broadcast date and hour, channel number, program genre, etc.) of the TV program from the EPG information memory 14, and stores the EPG information data in the recorded-program information memory 20. In other words, each time a TV program is recorded, the name, broadcast date and hour, channel number, genre, and the like of the TV program are successively stored in the recorded-program information memory 20 as shown in Fig. 3. The controller 10 stores information representing the name of the currently recorded TV program in a recording-in-progress program information register 31.

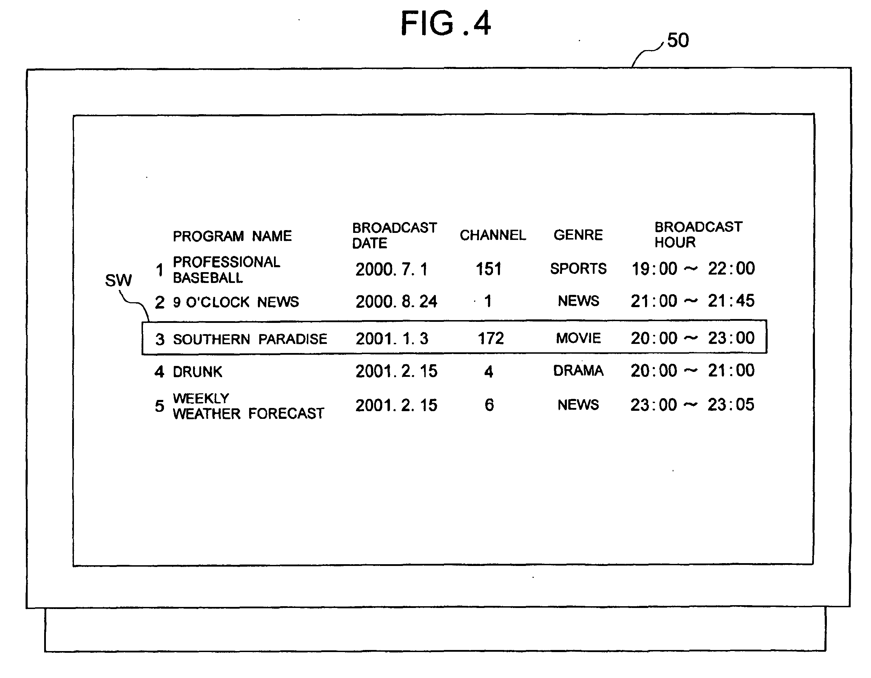

When the user presses the recorded-program list button RL on the remote controller 8, the system controller 10 reads information of all the recorded programs stored in the recorded-program information memory 20. The system controller 10 then generates display data that is used to display program information for each of the recorded programs on the screen of the display unit 50 in a table format, and supplies this display data to the OSD signal generating circuit 16. As a result, a recorded-program list is displayed on the screen of the display unit 50 as shown in Fig. 4. The user moves a selection frame SW over a desired program, which the user wants to play back among the programs on the recorded-program list shown in Fig. 4, by operating the cursor key CK installed on the remote controller 8. The user then presses the playback button P on the remote controller 8. In response to this operation, the system controller 10 supplies the playback start address of the program surrounded by the selection frame SW, together with a playback start command signal, to the recording unit 2. As a result, the program surrounded by the selection frame SW is retrieved and played back from the recording medium of the recording unit 2, and displayed on the screen of the display unit 50. Next, the system controller 10 reads the name of the currently played back program from the recorded-program information memory 20, and stores this name in a playback-in-progress program information register 32.

In this manner, so-called simultaneous recording and playback are performed in which the currently broadcast program is recorded by the recording unit 2 while a desired program that has already been recorded in the recording unit 2 is played back and displayed.

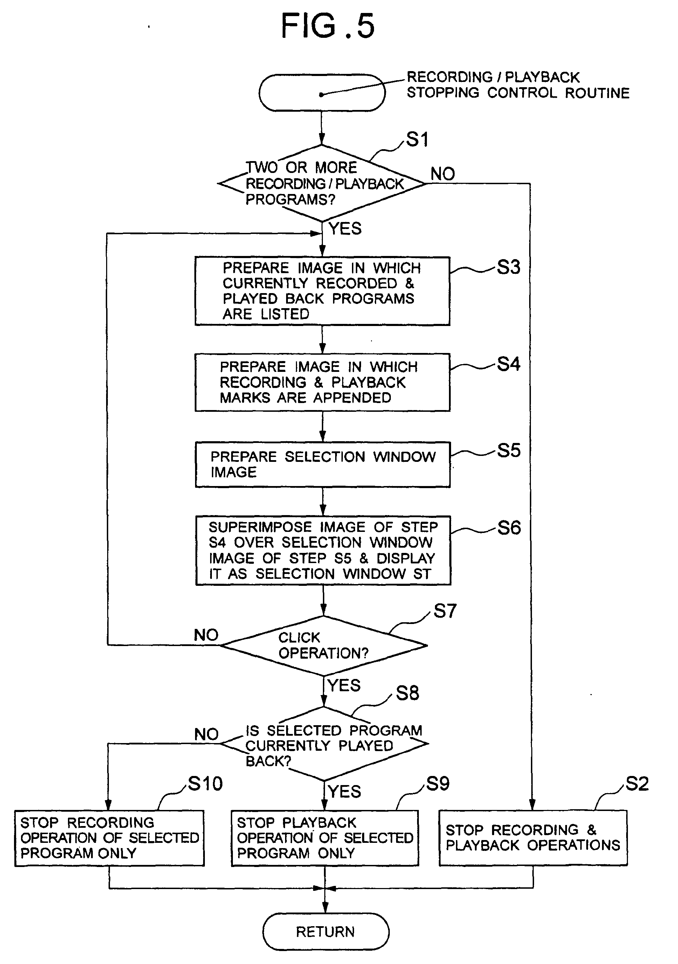

If the user presses the stop button S on the remote controller 8, the system controller 10 shifts into a recording/playback stopping subroutine as shown in Fig. 5.

In Fig. 5, the system controller 10 first makes a determination as to whether or not the total number of program names stored in the recording-in-progress program information register 31 and playback-in-progress program information register 32 is more than one (Step S1) When it is determined in Step S1 that the total number of program names stored in the two registers is not two or greater, the system controller 10 supplies a recording/playback stop command signal to the recording unit 2 to stop both the recording and playback operations performed by the recording unit 2 (Step S2). As a result of the execution of Step 2, the recording unit 2 stops the recording or playback operation that is currently performed.

On the other hand, when it is determined in Step S1 that the total number of program names stored in the recording-in-progress program information register 31 and playback-in-progress program information register 32 is two or greater, the system controller 10 performs the following operations beginning with Step S3.

First, the system controller 10 creates a program list image in which the names of programs currently recorded that are stored in the recording-in-progress program information register 31 and the names of programs currently played back that are stored in the playback-in-progress program information register 32 are listed in a predetermined format (Step S3). Next, the system controller 10 creates a recording/playback-in-progress program list image in which recording marks RM are appended to the names of the currently recorded programs and playback marks PM are appended to the names of the currently played back programs (Step S4). The system controller 10 then generates a stop-program selection window image in which a message such as "please select the program to be stopped" is displayed (Step S5). The system controller 10 generates display data in which the recording/playback-in-progress program list image generated in Step S4 is superimposed on the stop-program selection window image, and supplies the display data to the OSD signal generating circuit 16 (Step S6).

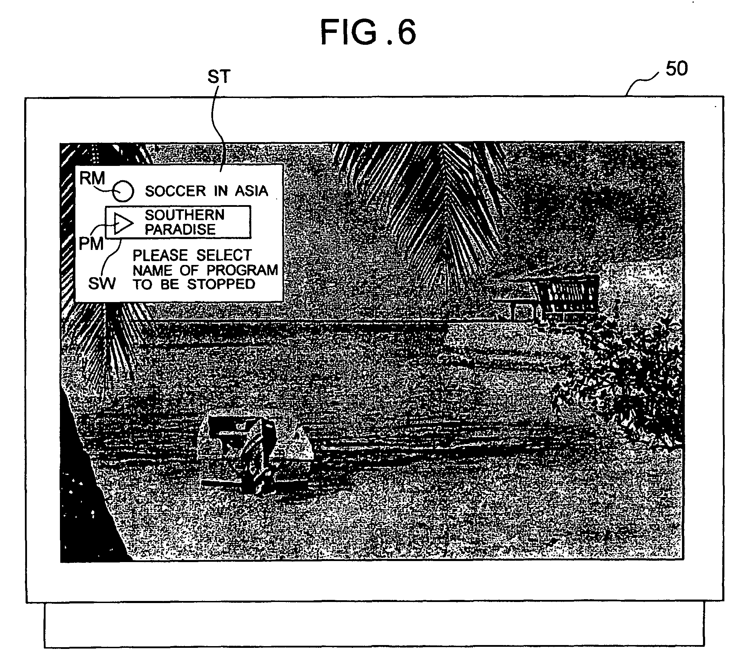

As a result of the execution of Step S3 through Step S6, a stop-program selection window ST such as that shown in Fig. 6 is displayed in a partial region on the screen of the display unit 50. The names of the programs currently recorded and played back are displayed (listed) inside the stop-program selection window ST. In this list display, the recording mark RM indicating that the program in question is currently being recorded is placed beside the name of each of the currently recorded programs, and the playback mark PM indicating that the program in question is currently being played back is placed beside the name of the currently played back program. Further, a message such as "please select the program to be stopped" is displayed inside the stop-program selection window ST in order to urge the user to select the program whose playback or recording is to be stopped.

After Step S6, the system controller 10 determines whether or not a click operation has been performed by means of the cursor key CK on the remote controller 8 (Step S7). When it is determined in Step S7 that no click operation has been performed, the system controller 10 returns to Step S3, and continues to display the stop-program selection window ST as shown in Fig. 6.

By operating the cursor key CK on the remote controller 8, the user can move the selection frame SW within the stop-program selection window ST. The user places the selection frame SW onto the name of the program for which the user wants to stop the playback or recording operation. The user then performs a click operation on this program name.

When it is determined in Step S7 that the click operation has been performed by the user, the system controller 10 determines whether the program having the name selected by the selection frame SW is a currently played back program (Step S8). When Step S8 determines that the selected program is a currently played back program, the system controller 10 sends a playback stop command signal, which stops only the playback operation for the program selected by the selection frame SW, to the recording unit 2 (Step S9). Upon execution of Step S9, the recording unit 2 stops only the playback operation for the program selected by the selection frame SW. On the other hand, when it is determined in Step S8 that the program in question is not a program currently played back, the system controller 10 sends a recording stop signal to the recording unit 2 to stop only the recording operation for the program selected by the selection frame SW (Step S10). As a result of the execution of Step S10, the recording unit 2 stops only the recording operation for the program selected by the selection frame SW.

Following the execution of Step S2, S9 or S10. the system controller 10 exits the recording/playback stopping control subroutine, and returns to a main routine (not described).

In the above described recording and playback stopping control, therefore, if the stop button S is operated during simultaneous recording and playback, a list of the names of all the programs currently recorded and played back is first displayed on the screen of the display unit 50. Then, when the user selects the program that is to be stopped from the list of the program names, only the recording or playback operation for the selected program is stopped.

Accordingly, the recording apparatus 40 can stop the recording or playback operation for a desired program during the simultaneous recording and playback of a plurality of programs. The recording apparatus 40 has only one stop button S. The recording apparatus 40 does not need separate (independent) stop buttons for stoppage of the recording and stoppage of the playback.

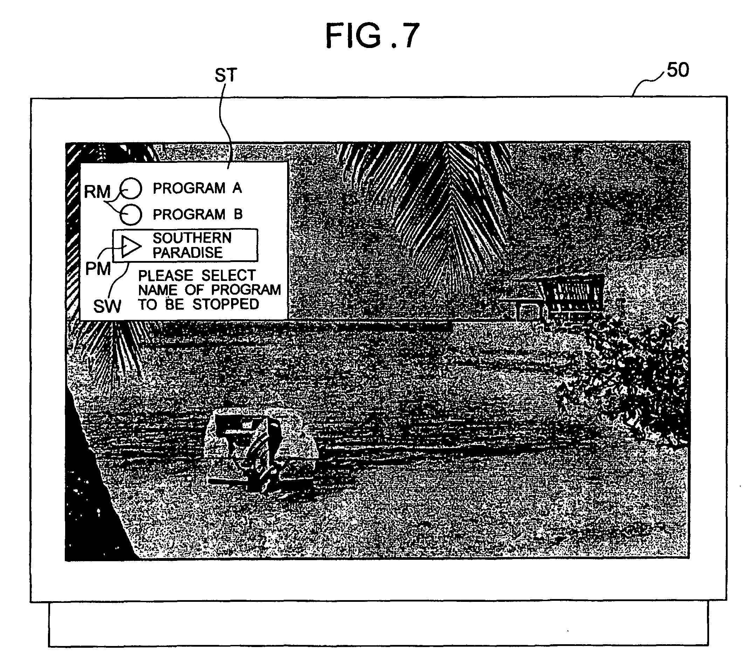

It should be noted that the present invention can also be applied when there are two or more "currently recorded TV programs" in the stop-program selection window ST although Fig. 6 shows a single currently recorded program. In this case, the recording apparatus 40 includes a plurality of TV tuners 1. It should be assumed now that the recording apparatus 40 includes two TV tuners (referred to as "first and second TV tuners"). The recording apparatus 40 may include two recording units (e.g., HDD and DVD-RW) 2 to receive a TV program A at the first tuner and another TV program B at the second tuner. Alternatively the recording apparatus 40 may include a single recording unit 2 to receive the TV programs A and B. The stop-program selection window ST on the display unit 50 then becomes as shown in Fig. 7. The programs A and B are simultaneously recorded by the recording unit 2.

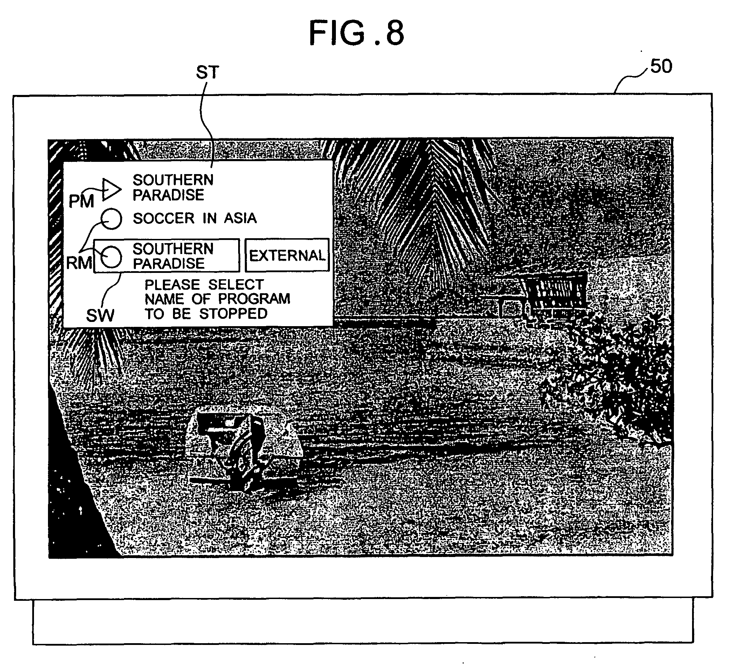

In the above described embodiment, the stopping control during simultaneous recording and playback has been described with only the recording unit 2. The present invention is, however, not limited to such embodiment. For example, the stopping control of the present invention can be performed with the recording and playback operations made by the external devices connected to the recording apparatus 40 via the IEEE1394 bus. In this case, the system controller 10 determines which external device(s) is currently performing recording and/or playback operations on the basis of the contents stored in the external device information memory 12. Then, the system controller 10 retrieves the names of the TV programs currently recorded and/or played back by the external devices from the external device information memory 12 together with the name/type of the external device concerned. The system controller 10 stores such information in the recording-in-progress program information register 31 and the playback-in-progress program information register 32, respectively. Then, the names of the programs currently recorded by the external device(s) are additionally displayed in the stop-program selection window ST. It should be assumed here that the recording unit 2 is now recording a program "Soccer in Asia" that is currently broadcast while playing back a recorded program "Southern Paradise", and a DVD recorder connected to the IEEE1394 bus is recording the "Southern Paradise". If the stop button S is pressed, a stop-program selection window ST such as that shown in Fig. 8 is displayed. An "EX (external)" mark indicating that the DVD recorder is the external device connected to the IEEE1394 bus is displayed to the right of the program name "Southern Paradise" recorded by the DVD recorder. By operating the cursor key CK on the remote controller 8, the user can move the selection frame SW over the program name "Southern Paradise" that is currently recorded, and performs a click operation. In response to this, the system controller 10 transmits a recording stop command signal to the DVD recorder via the IEEE1394 interface circuit 11 to stop the recording operation of the DVD recorder. In other words, only the recording operation of the DVD recorder connected to the IEEE1394 bus is stopped by the operation of the stop button S.

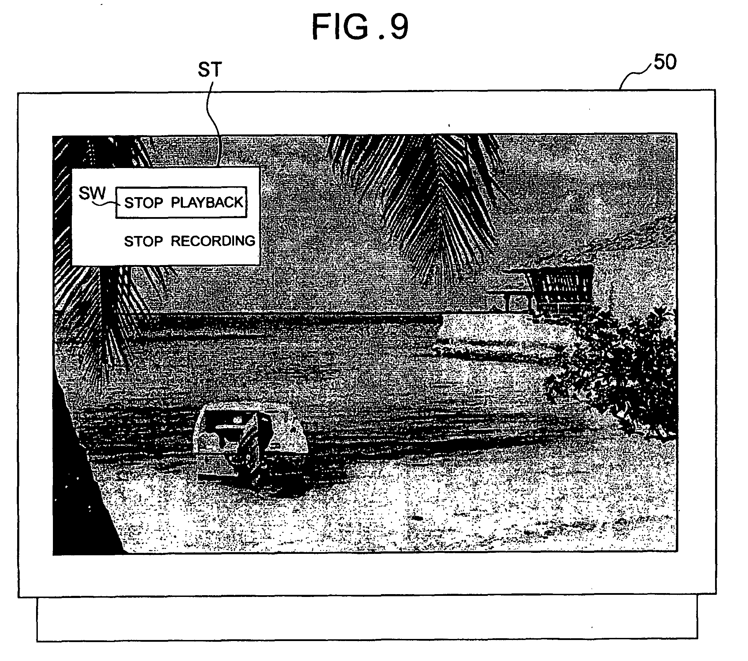

In the above described embodiment, the names of all programs currently recorded and played back are displayed in the stop-program selection window ST. However, the present invention is not limited in this regard. For example, no program names need be displayed if only one program is currently recorded and only one program is currently played back. In such a case, it is necessary to consider only the stopping of the recording operation or the stopping of the playback operation. Therefore, the character sequences of, for example, "stop playback" and "stop recording" are displayed in the stop-program selection window ST as shown in Fig. 9. When the user selects "stop playback" by the selection frame SW, the playback operation is stopped, and when the user selects "stop recording" by the selection frame SW, the recording operation is stopped.

## Claims

1. A recording and playback apparatus which, while recording at least one information block on at least one recording medium, can play back a desired information block from at least one information block that has been recorded on the at least one recording medium, the recording and playback apparatus comprising:
a receiving unit for receiving a stop operation from a user;
a display unit for displaying names of all information blocks currently recorded and a name of an information block currently played back when the receiving unit receives the stop operation, so as to allow the user to select the name of the information block, for which the user wants to stop recording or playing back, from the displayed names; and
a stop unit for stopping one of a recording operation and a playback operation for the information block having the name selected by the user.

2. The recording and playback apparatus according to claim 1, wherein the display unit displays the name of the currently played back information block together with a playback mark, and displays the name of each of the currently recorded information blocks together with a recording mark.

3. The recording and playback apparatus according to claim 1, wherein the information block is a series of signals representing a television program broadcast from a television station, and the name of the information block is a name of the television program.

4. The recording and playback apparatus according to claim 1 further including a first recording unit to record the at least one information block.

5. The recording and playback apparatus according to claim 4, wherein the first recording unit can play back a first information block while recording a second information block.

6. The recording and playback apparatus according to claim 5 further including a second recording unit to record the first information block.

7. The recording and playback apparatus according to claim 6, wherein the currently played back information block is played back by the first recording unit, and the currently recorded information blocks are recorded by the first and second recording units.

8. The recording and playback apparatus according to claim 7, wherein the first recording unit is a built-in recording module and the second recording unit is an externally connected DVD recorder.

9. The recording and playback apparatus according to claim 3 further including an EPG unit for obtaining information about the currently broadcast television program from an internet.

10. The recording and playback apparatus according to claim 1, wherein the display unit displays a message in addition to the names of the information blocks.

11. The recording and playback apparatus according to claim 4 further including a plurality of tuners to receive a plurality of information blocks simultaneously, and the first recording unit records the plurality of information blocks simultaneously.

12. A recording and playback apparatus which, while recording at least one information block on at least one recording medium, can play back a desired information block from at least one information block that has been recorded on the at least one recording medium, the recording and playback apparatus comprising:
an accepting unit for accepting a stop command from a user;
a display unit for displaying a selection image to allow the user to select one of stoppage of a recording operation and stoppage of a playback operation when the accepting unit accepts the stop command; and
a stop unit for stopping one of the recording operation and the playback operation in accordance with a selection made by the user.

13. The recording and playback apparatus according to claim 12, wherein the information block is a series of signals representing a television program broadcast from a television station.

14. The recording and playback apparatus according to claim 12 further including a first recording unit to record the at least one information block.

15. The recording and playback apparatus according to claim 14, wherein the first recording unit can play back a first information block while recording a second information block.

16. The recording and playback apparatus according to claim 15 further including a second recording unit to record the first information block.

17. The recording and playback apparatus according to claim 16, wherein the currently played back information block is played back by the first recording unit, and the currently recorded information block is recorded by one of the first and second recording units.

18. The recording and playback apparatus according to claim 16, wherein the first recording unit is a built-in recording module and the second recording unit is an externally connected DVD recorder.

19. The recording and playback apparatus according to claim 13 further including an EPG unit for obtaining information about the currently broadcast television program from an internet.

20. A method performed by an apparatus for simultaneously recording a plurality of information blocks and playing back one information block, comprising the steps of:
A) receiving a stop operation from a user;
B) displaying names of all information blocks currently recorded and a name of an information block currently played back when receiving the stop operation, so as to allow the user to select the name of the information block, for which the user wants to stop recording or playing back, from the displayed names; and
C) stopping one of a recording operation and a playback operation for the information block having the name selected by the user.
